# EUROPÄISCHE PATENTSCHRIFT

(11) **EP 0 543 348 B1**
(45) Veröffentlichungstag und Bekanntmachung des Hinweises auf die Patenterteilung: **05.02.1997**
(21) Anmeldenummer: 92119639.0
(22) Anmeldetag: 17.11.1992
(51) Int. Cl.: E04B 2/28, B28B 11/12, B28D 1/18

(54) **Mauerstein mit einer Greifeinrichtung sowie Verfahren und Vorrichtung zur Herstellung der Greifeinrichtung**
Building block with a grip to allow lifting, and process and device for making the grip
Bloc de construction avec un moyen de prise, procédé et dispositif pour le réaliser

(30) Priorität: 22.11.1991 EP 91119974
(43) Veröffentlichungstag der Anmeldung: 26.05.1993
(73) Patentinhaber: YTONG AG, D-80797 München (DE)
(72) Erfinder: Bayer, Peter, Dipl.-Ing., W-8899 Rettenbach (DE); Felbermeir, Johann, W-8859 Ludwigsmoos (DE)
(74) Vertreter: Patentanwälte Dr. Solf & Zapf

(56) Entgegenhaltungen:
- EP-A- 0 238 474
- DE-A- 3 520 716
- DE-A- 3 541 280
- DE-B- 1 201 534
- DE-C- 182 642
- DE-C- 581 210
- DE-U- 7 317 165

## Beschreibung

Die Erfindung betrifft einen großformatigen Mauerstein aus Porenbeton, insbesondere aus Gasbeton, mit je einer Ausnehmung in zwei sich gegenüberliegenden Wandungsflächen, insbesondere in jeder der beiden Stirnseitenflächen, als Greifeinrichtung. Die Erfindung betrifft ferner ein Verfahren und eine Vorrichtung zur Herstellung der Greifeinrichtung.

Greifeinrichtungen als Greifhilfe für großformatige Mauersteine sind in Form von Nuten, Taschen und Schlitzen bekannt.

Beispielsweise ist aus der DE 40 08 582 A1 eine senkrecht von der Stirnfläche ausgehende, in die Stirnwand eingebrachte Nut bekannt, deren Verlauf - betrachtet in der Draufsicht auf die Stirnfläche - halbkreisbogenförmig oder im wesentlichen halbkreisbogenförmig bzw. ringzylindrisch ist, wobei die Enden der Nut in der Oberfläche des Steins auslaufen. Die Nut wird z. B. mit Hilfe eines Fräsers in Form eines Fräszylinders erzeugt, wobei zwei Steine aufeinander liegen, so daß eine geschlossene ringzylindrische Nut ausgefräst wird. Nach dem Trennen der beiden Steine ist in jedem Stein eine halbringzylindrische Nut vorhanden. Diese bekannte Griffnut ist ergonomisch nicht optimal, erfordert zuviel Materialverlust und erzeugt eine zu hohe Schwächung der statischen Belastbarkeit des Steins. Die bekannte Griffnut ist nur bei großformatigen Steinen einfräsbar, die ausreichend breite Flächen aufweisen.

Ähnliche Griffnuten mit den gleichen Nachteilen sind aus dem DE-GM 88 13 600 bekannt, wobei bei diesen Griffnuten noch hinzu kommt, daß sie sich nur mit erheblich höherem Aufwand formen lassen.

Grifftaschen für tongebundene Hohlblocksteine werden im DE-GM 73 17 165 beschrieben. Über die Herstellungsweise sowie über ergonomische Raumformen der Grifftaschen ist in dieser Druckschrift nichts ausgesagt.

In der DE 35 41 280 Al wird dagegen ein Verfahren angegeben, Grifftaschen oder -nuten beim Strangpreßverfahren von Hohlblocksteinen mit einem Drahtbügel einzuschneiden. Dieses Verfahren ist für Porenbetonprodukte allenfalls nur mit erheblichem Aufwand anwendbar, weil die Bewegung des Strangpreßvorgangs nicht zur Verfügung steht. Außerdem lassen sich mit dem bekannten Verfahren keine ergonomisch optimalen Raumformen erzeugen.

Aus der EP 0 238 474 A2 geht ein Verfahren zum Einbringen einer Ausnehmung in ein Betonelement hervor, bei dem ein Schaber parallel zu einer Seitenwand des Betonelements hin- und herbewegt wird, wobei zusätzliche Elemente vorgesehen sind, die den Schaber senkrecht in Richtung auf das Betonelement zuführen, so daß durch die Hin- und Herbewegung eine quaderförmige Ausnehmung aus dem Betonelement ausgekratzt wird. Bei diesem Verfahren werden zwei Linearbewegungen einander überlagert, so daß eine quaderförmige Ausnehmung aus dem Betonelement ausgeschabt wird.

Das aus der DE 35 20 716 Al bekannte, mit einem rotierenden Drahtbügel ausgeführte Schlitzfräsverfahren für Porenbetonsteine erzeugt auf einfache Weise einen Schlitz als Greifhilfe in einer Stirnwandung, dessen Schlitzboden sich bogenförmig in den Stein hinein erstreckt. Oberhalb des Schlitzes befindet sich, vom Schlitz ausgehend bis zur Oberfläche des Steins hinreichend, eine Griff- bzw. Schlupfmulde. Durch die Schlupfmulde werden die Finger der Hand von oben bzw. von der Oberfläche des Steins kommend gesteckt, bis sie den Griffschlitz erreichen; durch anschließendes Krümmen der Finger können die Fingerspitzen in die Schlitzausnehmung gleiten. Diese Greifhilfe ist auf einfache Weise herstellbar und hat sich bewährt. Sie weist lediglich noch Mängel bezüglich der Ergonomie und des Materialverlustes auf.

Aufgabe der Erfindung ist, eine auf die Handmaße einer männlichen Person besser abgestimmte und mit einfachen Mitteln herstellbare Greifeinrichtung insbesondere für einen Porenbetonstein zu schaffen, in die zumindest die ersten Fingerglieder vollständig eingreifen können, die wenig Materialabtrag erfordert und den Stein hinsichtlich seiner statischen Belastbarkeit nur unwesentlich schwächt. Die Greifeinrichtung soll zudem in den grünen ungehärteten Stein und auch in relativ kleinformatige Steine einbringbar sein.

Diese Aufgabe wird durch die Merkmale der Ansprüche 17 und 22 gelöst. Vorteilhafte Weiterbildungen der Erfindung werden in den von diesen Ansprüchen abhängigen Unteransprüchen gekennzeichnet.

Aus der EP 0 238 474 A3 sind zwar ein Verfahren und eine Vorrichtung zum Einkratzen von Austiefungen in ein Betonsteinelement unter Verwendung einer exzentrisch angetriebenen Schubstange bekannt. Das bekannte Verfahren bzw. die bekannten Vorrichtungen sind aber nicht dazu verwendbar, der Ergonomie entgegenkommende Grifflöcher bei geringstem Materialverlust in einen Porenbetonstein zu formen.

Anhand der Zeichnungen wird die Erfindung im folgenden beispielhaft näher erläutert. Es zeigen:
- Fig. 1: eine Seitenansicht einer ersten Ausführungsform einer Fräsvorrichtung zur Erzeugung der erfindungsgemäßen Greifhilfe mit Draufsicht auf die Schwingebene des Kurbelantriebs der Vorrichtung;
- Fig. 2: eine Draufsicht auf die Fräsvorrichtung gemäß Fig. 1;
- Fig. 3a: eine Frontansicht auf die Stirnfläche eines mit der Vorrichtung gemäß Fig. 1 und 2 bearbeiteten quaderförmigen Gasbetonsteins;
- Fig. 3b: eine Draufsicht auf die Oberfläche des Steins gemäß Fig. 3a;
- Fig. 3c: einen Schnitt entlang der Linie A-A in Fig. 3a mit Blickrichtung in Pfeilrichtung;
- Fig. 4: eine abgewandelte Ausführungsform des Fräsbügels des Fräswerkzeugs;
- Fig. 4a bis 4c: Ansichten wie in den Fig. 3a bis 3c auf einen mit der Fräsvorrichtung gemäß Fig. 4 erzeugten quaderförmigen Gasbetonstein;
- Fig. 5: eine weitere Ausführungsform einer Fräsvorrichtung zur Erzeugung einer erfindungsgemäßen Greifhilfe in einer der Fig. 2 entsprechenden Darstellung;
- Fig. 6: eine Variante der Fräsvorrichtung gemäß Fig. 5 in der gleichen Darstellung;
- Fig. 7: eine schematische perspektivische Darstellung eines grünen Gasbetonblocks auf einem Härteboden;
- Fig. 8: eine Seitenansicht einer anderen Ausführungsform einer Fräsvorrichtung zur Erzeugung einer Greifhilfe;
- Fig. 9: eine Draufsicht auf die Fräsvorrichtung nach Fig. 8.

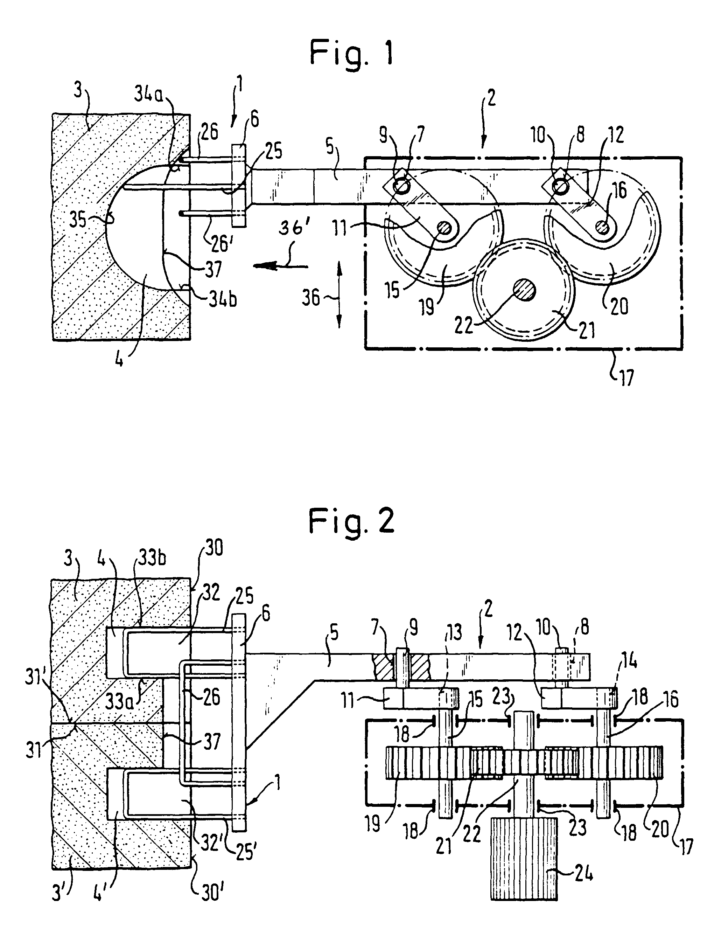

Die in den Fig. 1 und 2 im Prinzip dargestellte Fräsvorrichtung zur Ausbildung einer Greifhilfe 4 weist einen Fräswerkzeugkopf 1 auf, der von einem Kurbeltrieb 2 angetrieben wird, so daß in einem grünen Gasbeton-Mauerstein 3 eine Greifhilfe 4 ausgebildet werden kann. Der Kurbeltrieb 2 umfaßt eine Schubstange 5, an deren einem Ende der Werkzeugkopf 1 mit einem Werkzeugträger 6 z. B. in Gestalt einer Tragplatte ausgebildet ist. Die Schubstange 5 weist zwei in ihrer Längserstreckung voneinander beabstandete Bohrungen 7 und 8 auf, die senkrecht zur Erstrekkungsrichtung der Schubstange 5 verlaufen. In den Bohrungen 7 und 8 sitzen Zapfen 9 und 10 drehbar, die jeweils an einem Ende eines Hebelarms 11 oder 12 angeordnet und fest mit diesem verbunden sind. Die Hebelarme 11 und 12 bilden zusammen mit den Zapfen 8 und 9 die Kurbeln des Kurbeltriebs 2. Die Hebelarme 11 und 12 weisen anderendig Bohrungen 13 und 14 auf, in welche Wellen 15 und 16 drehfest und axial unverschieblich eingesetzt sind, die sich zwar parallel zu den Zapfen 9, 10 erstrecken, jedoch in die entgegengesetzte Richtung ausgerichtet sind. Die Wellen 15 und 16 stecken, jeweils zweiseitig in Lagern 18 gelagert, in einem kastenförmigen Chassis 17 drehbar, wobei die Lager 18 im Abstand der Wellen voneinander beabstandet in den Chassiswandungen vorgesehen sind. Jeweils zwischen zwei zusammengehörenden Lagern 18 einer Welle 15, 16 ist auf jeder Welle ein Zahnrad 19 bzw. 20 angeordnet und drehfest sowie axial unverschieblich mit der entsprechenden Welle verbunden. Mit den Zahnrädern 19 und 20 kämmt gemeinsam ein dazwischenliegendes Zahnrad 21, das drehfest und axial unverschieblich auf einer Welle 22 sitzt, die in zwei Lagern 23 in den Chassiswandungen gelagert ist. An die Welle 22 ist ein Antriebsmotor 24 angeschlossen, der beispielsweise als Elektromotor ausgebildet sein kann.

Die Schubstange 5 kann somit eine Schwingbewegung in der Ebene ausführen, die z. B. eine vertikale Ebene ist und die der Zeichnungsebene in Fig. 1 entspricht. Diese Schwingbewegung folgt einer Kreisbogenbahn, deren Radius durch den Abstand des Zapfens 9 bzw. 10 von der Welle 15 bzw. 16 im jeweiligen Hebelarm 11 bzw. 12 festgelegt ist. Der maximale Hub der Schubstange bzw. die Wegstrecke ihrer translatorischen Bewegung entspricht dem Doppelten dieses Radius'.

Aus Fig. 2 geht hervor, daß an der Tragplatte 6 zwei Paar unterschiedlich gestaltete Fräsbügel 25, 25' bzw. 26, 26' nach vorne vorstehend angebracht sind, und zwar jeweils in Gestalt U-förmig gebogener Profildrähte, die mit ihren freien Schenkelenden in der Tragplatte 6 verankert sind. Die Schenkel der U-förmigen Profildrähte verlaufen senkrecht zur Plattenebene bzw. parallel zur Erstreckungsrichtung der Schubstange 5, während die jeweilige Basis der U-förmigen Profildrähte senkrecht zur Schubstangenerstreckung angeordnet ist. Die U-Profile der Fräsbügel 26, 26', die zur Gestaltung der Schlupfmulde dienen, liegen in zueinander parallelen Ebenen beabstandet voneinander. Die U-förmigen Profildrähte der Fräsbügel 25, 25', die den Griffschlitz bilden sollen, sind länger und schmaler ausgebildet als die Fräsbügel 26, 26'. Die längeren Fräsbügel 25, 25' liegen seitlich nebeneinander in einer im Vergleich zur Schwingebene der Schubstange 5 horizontal bzw. dazu senkrechten Ebene, und zwar - von der Seite betrachtet (Fig. 1) - im Zwischenraum zwischen den vertikal übereinander angeordneten Fräsbügeln 26, 26'. Dabei ist zweckmäßig, daß - in der Draufsicht gemäß Fig. 2 betrachtet - jeder außenliegende Schenkel der Fräsbügel 26, 26' jeweils zwischen den Schenkeln eines der Fräsbügel 25, 25' angeordnet ist.

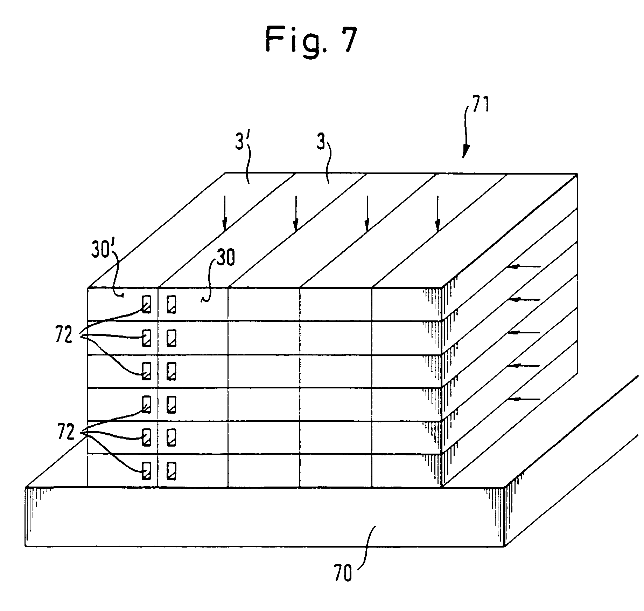

Vorteilhaft ist, daß mit der erfindungsgemäßen Vorrichtung gemäß Fig. 1 und 2 in einen noch ungehärteten, auf dem Härteboden 70 ruhenden Gasbetonblock 71, der bereits in einzelne übereinander und nebeneinander angeordnete Gasbetonsteine 3 entlang der in Fig. 7 durch Pfeile markierten Schnittlinien geschnitten ist, gleichzeitig alle in Fig. 7 dargestellten Greifhilfen 72 hergestellt werden können, wobei nicht nur die vertikal übereinander liegenden Steine 3', sondern auch die seitlich benachbarten Steine 3 gleichzeitig mit einem Werkzeugsatz von den Stirnseiten 30' bzw. 30 her bearbeitet werden können.

Nach der Erfindung wird der Werkzeugkopf 1 in Pfeilrichtung 36' (siehe Fig. 1) an die Steinstirnfläche 30 bzw. 30' herangefahren, bis die Bügel 25, 25' die Stirnflächen 30, 30' berühren; danach wird bei laufendem Kurbeltrieb weiter in Pfeilrichtung 36' vorgeschoben, so daß allmählich ein Schlitz 32 bzw. 32' ausgekratzt bzw. ausgefräst wird; sobald dabei die Bügel 26, 26' die Masse berühren, beginnt das Auskratzen bzw. Ausfräsen der Schlupfmulden 33, 33'. Vorteilhaft ist, daß je länger die Bügel 25, 25' gewählt sind, umso tiefer die Schlitze 32, 32' bei z. B. gleicher Schlupfmuldengröße geschaffen werden können. Die Tiefe ist zudem abhängig vom vorwählbaren Vorschubweg in Richtung des Pfeiles 36'.

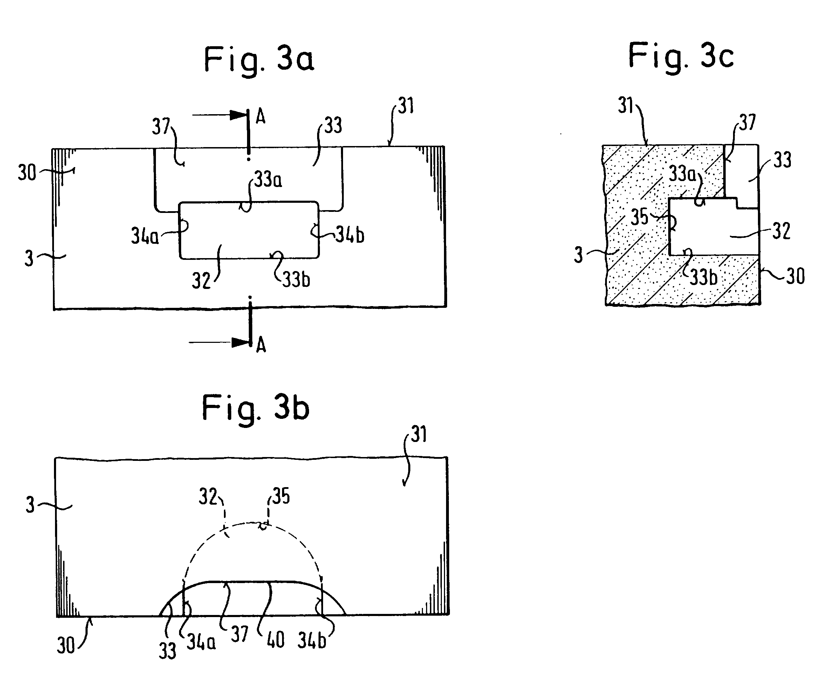

Ein erfindungsgemäßer, im Querschnitt bzw. in der Mündungsöffnung rechteckiger Schlitz 32, der mit einem Bügel 25 erzeugt wird, weist in der Regel eine Bodenwandung 33b, eine dazu parallele Deckenwandung 33a, die senkrecht dazu verlaufenden Seitenwandungen 34a, 34b sowie einen Schlitzboden 35 auf, wobei die Seitenwandungen bogenförmig in den Schlitzboden 35 übergehen können. Der Schlitz 32 erstreckt sich von der Stirnfläche 30 ausgehend senkrecht in den Stein, wobei die tiefste Tiefe des Schlitzes 32 zumindest dem Radius des Bogens des Schlitzbodens 35 entspricht. Demgemäß beträgt die Tiefe des Schlitzes 32 grundsätzlich mindestens die Hälfte der Breite der rechteckigen Mündungsöffnung des Schlitzes 32 (siehe Fig. 3b). Vorzugsweise ist die Tiefe jedoch etwas tiefer gewählt.

Die Höhe des Schlitzes 32 zwischen der Bodenwandung 33b und der Deckenwandung 33a ist zweckmäßigerweise geringer als die Breite der Mündungsöffnung. Die oberhalb in Richtung Oberfläche 31 des Steins unmittelbar sich anschließende Schlupfmulde 33 ist gleich breit oder breiter als die Mündungsöffnung des Schlitzes 32. Die Tiefe der Schlupfmulde 33 ist relativ gering und beträgt z. B. nur ein Drittel der Tiefe des Schlitzes 32. Der Muldenboden 37 mündet mit kurzen Bogenabschnitten in der Stirnfläche 30 des Steins und verläuft im Bereich zwischen den Bögen geradlinig. Dieser Verlauf ergibt sich durch die Verwendung von zwei Bügeln 26, 26' zur Erzeugung einer Mulde 33.

Das erfindungsgemäße Verfahren ermöglicht unter Verwendung der erfindungsgemäßen Vorrichtung, Seitenwandungen zu schaffen, die von der Stirnfläche des Steins senkrecht in den Stein hineingehen, wenn der Bügel 25 z. B. tiefer in den Stein eingeführt wird als der Radius des Kreisbogens des Werkzeugkopfes 1 bzw. der Achsen 9, 10 beträgt. Durch Verschieben des Werkzeugkopfes in Richtung Doppelpfeil 36 kann bewirkt werden, daß der Schlitz 32 und die Mulde 33 breiter werden. Somit kann mit einem entsprechend kleineren Kreisbogenradius jede beliebige Breite und bei entsprechender Länge des Bügels 25 eine erhebliche Tiefenerstreckung des Schlitzes erzeugt werden.

Sofern die Stirnfläche der Steine mit Nut- oder Federeinrichtungen ausgebildet ist, stören diese Elemente beim Einbringen der Greifhilfe nicht. Es wird im Falle einer Feder zusätzliches Material und im Falle einer Nut weniger Material ausgefräst, wobei das erfindungsgemäße Verfahren insbesondere im Falle einer Nut gewährleisten kann, daß ein ausreichend tiefer Griffschlitz ausgenommen werden kann, was bei den bekannten Verfahren nur durch zusätzliche Maßnahmen oder durch zusätzlichen Materialabtrag neben der Nut möglich wäre, um ausreichende Tiefe für den Griffschlitz zu erzeugen. Nach dem erfindungsgemäßen Verfahren kann die Tiefe relativ unabhängig von der Breite des Schlitzes gewählt werden, wobei die Breite zweckmäßigerweise nur geringfügig breiter ist als die durchschnittliche Breite einer männlichen Hand, ggf. unter Zurechnung einer zusätzlichen Breite, die ein Handschuh erfordert, den ein Maurer, der die Steine handhaben muß, ggf. trägt.

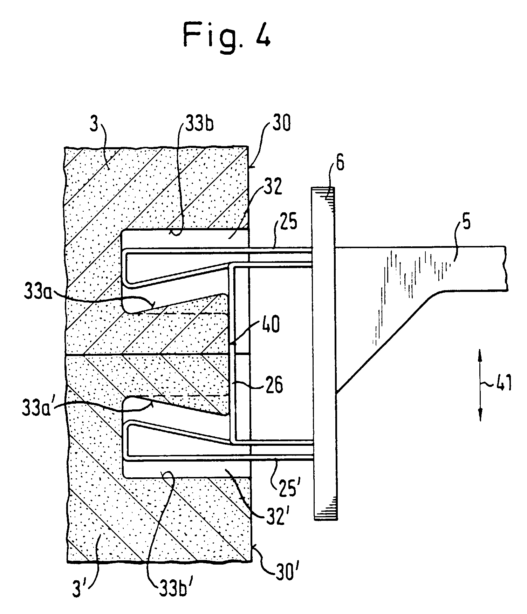

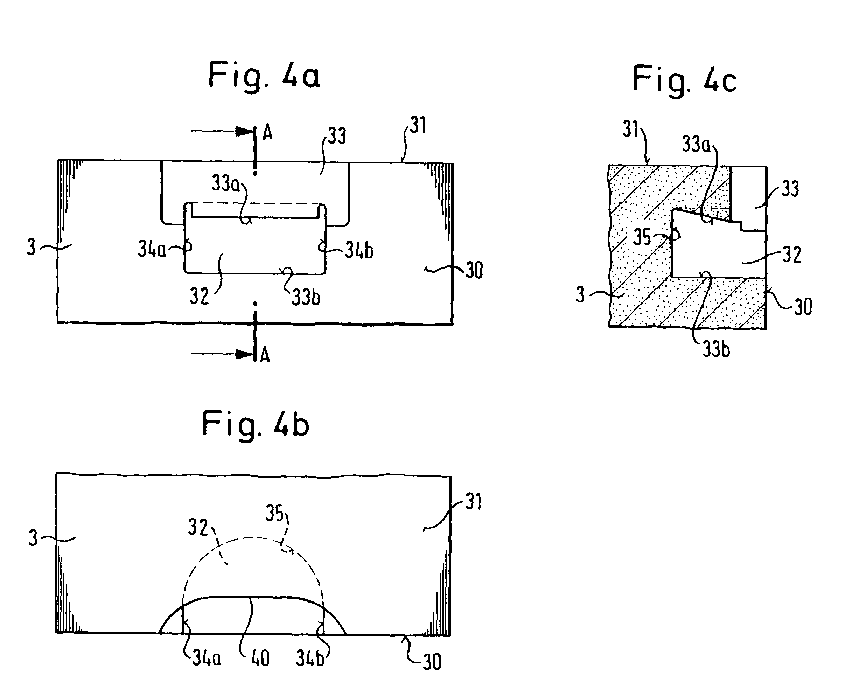

Vorteilhaft ist, daß das Fräswerkzeug aus Drahtbügeln besteht, denen beliebige Bügelformen gegeben werden können. Demgemäß kann entsprechend Fig. 4 nach einer besonderen Ausführungsform der Erfindung vorgesehen sein, den Schenkel des Schlitzfräsbügels 25, 25', der die Deckenwandung 33a des Schlitzes 32, 32' fräsen soll, vom Basissteg her schräg auf den anderen Schenkel zulaufend auszubilden und die Breite des Basisstegs des Bügels geringer auszuführen als die Höhe des Schlitzes 32, 32' betragen soll. Durch Versetzen der Fräsvorrichtung in Doppelpfeilrichtung 41 kann die Höhe des Schlitzes 32, 32' verändert werden, wobei aus der Schrägstellung des einen Schenkels des Fräsbügels 25, 25' ein Hinterschnitt der Deckenwandung 33a, 33a', d. h. eine Vergrößerung der Höhe des Schlitzes 32, 32' zum Schlitzboden 35 hin resultiert (Fig. 4a, 4b, 4c). Dieser Hinterschnitt in der Deckenwandung 33a, 33a' erleichtert das Halten des Steins ganz erheblich und verhindert ein Abrutschen der Finger.

Zweckmäßigerweise wird - wie in Fig. 4 dargestellt - die Lage des schrägen Stücks des Schenkels der Fräsbügel 25, 25' nur bis zur Höhe des Basisstegs der Fräsbügel 26, 26' gewählt, wobei das sich anschließende, zur Platte 6 laufende Endstück der Schenkel der Bügel 25, 25' geradlinig verläuft und fluchtend zwischen den Schenkeln der Bügel 26, 26' angeordnet ist (Fig. 4). Diese Anordnung schafft vorsprungslose Flächen im Schlitz und in der Mulde, denn Vorsprünge könnten die Greifgleitbewegung der Hand behindern.

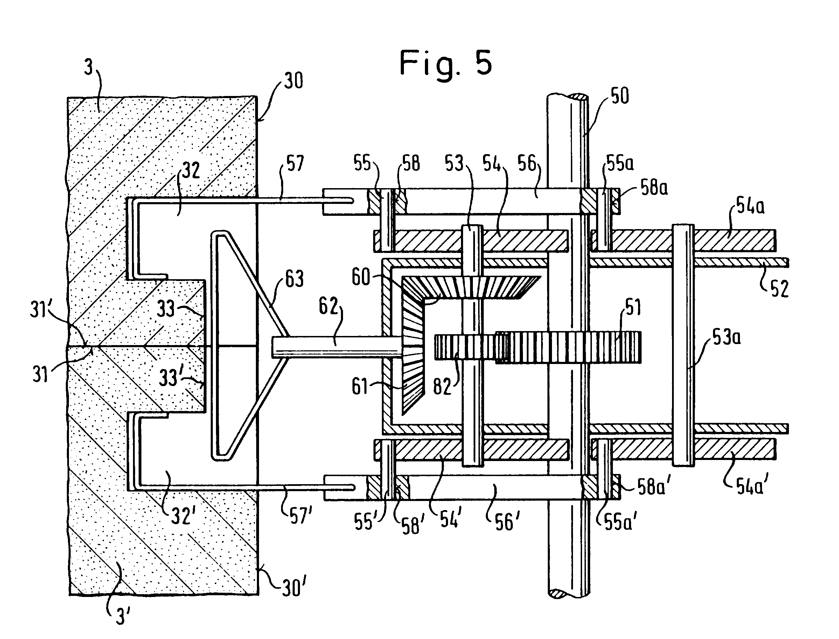

Mit einer in Fig. 5 dargestellten Fräsvorrichtung lassen sich ähnliche Raumformen von Greifhilfen bilden, wie sie in den Fig. 1 und 2 dargestellt sind. Demgemäß sind in Fig. 5 gleiche Raumformen mit gleichen Bezugszeichen versehen.

Die aus Fig. 5 erkennbare Fräsvorrichtung weist zwei seitlich voneinander beabstandete, jedoch gemeinsam angetriebene Kurbeltriebeinheiten auf, wobei eine gemeinsame Antriebswelle 50 an einem nicht dargestellten Motor angeschlossen ist. Die Antriebswelle 50 ist beidseitig länger als erforderlich, so daß in Richtung ihrer Verlängerungen eine Mehrzahl nebeneinander angeordneter Fräsvorrichtungen gemeinsam angeordnet und angetrieben werden kann.

Die Antriebswelle 50 trägt ein Zahnrad 51, das fest mit der Welle 50 verbunden ist, und lagert in einem Gehäuse 52, das einen U-förmischen Querschnitt aufweisen kann und Durchbrüche für die Antriebswelle 50 aufweist. Das Zahnrad 51 kämmt mit einem Zahnrad 52, das fest mit einer Welle 53 verbunden ist, die beidseits in dem Gehäuse 52 gelagert ist, über diese Lager nach außen vorsteht und auf den vorstehenden Wellenenden Schwungräder 54 und 54' trägt, die gleich ausgebildet und fest mit der Welle 53 verbunden sind. In die Schwungräder 54 und 54' sind jeweils an derselben Position peripher nach außen vorstehende Zapfen 55 und 55' eingesetzt und fest mit dem jeweiligen Schwungrad verbunden. Eine der Schwungradanordnung 54, 54' entsprechende Schwungradanordnung 54a und 54a' ist zurückgesetzt in gleicher Höhe am Gehäuse 52 vorgesehen. Auch die Schwungräder 54a und 54a' tragen peripher und nach außen abstehend fest mit ihnen verbundene Zapfen 55a und 55a'. Eine Zahnradverbindung der 54a und 54a' mit dem Zahnrad 51 ist jedoch nicht vorgesehen; diese Schwungräder sind vielmehr passiv angetrieben über jeweils eine Schubstange 56 bzw. 56', die an ihren vorderen Enden identisch ausgebildete und spiegelsymmetrisch zueinander verlaufende Fräsbügel 57 bzw. 57' tragen. Die Schubstangen 56, 56' weisen Lagerbohrungen 58, 58' sowie 58a, 58a' auf, in denen die Zapfen 55, 55' sowie 55a und 55a' drehbar gelagert sind.

Die Schubstangen 56, 56' sind somit jeweils Bestandteile eines Kurbeltriebs entsprechend dem gemäß Fig. 1 und 2, wobei die Fräsbügel 57, 57' im Gegensatz zu den Fräsbügeln 25, 25' L-förmig gebogen sind. Aufgrund dieser L-Form in Verbindung mit den Kurbeltrieben wird eine Gestalt der Griffschlitze 32, 32' in den Steinen 3, 3' ausgebildet, die derjenigen der Schlitze 32, 32' gemäß Fig. 1 und 2 entspricht.

Die Welle 53 trägt zusätzlich zu dem Zahnrad 52 wenigstens ein Kegelzahnrad 60, das fest mit der Welle 53 verbunden ist und mit einem Kegelzahnrad 61 kämmt, das senkrecht dazu angeordnet und fest mit einer zur Welle 53 senkrecht stehenden Welle 62 verbunden ist, die in der Frontwandung des Gehäuses 52 drehbar gelagert ist. Bei rotierender Antriebswelle 50 wird die Welle 62 ebenfalls gedreht. An ihrem freien vorderen Ende trägt die Welle 62, die über das Gehäuse 52 hinaus verlängert ist, einen dreieckigen Fräsbügel 63, der mit einer Dreiecksspitze an der Welle 62 befestigt ist, so daß sein insoweit freier Dreiecksschenkel den eigentlichen Fräsdraht bildet, der senkrecht zur Welle 62 verläuft. Bei rotierender Antriebswelle 50 rotiert dieser Fräsdrahtschenkel und fräst sich beim Vorschub der Fräsvorrichtung in die aneinandergrenzenden Mauersteine 3, 3' hinein, so daß Mauersteinmaterial zwischen den Schlitzen 32, 32' abgetragen wird, wodurch die Mulden 33, 33' entstehen, die einen ebenen Boden - wie dies in Fig. 5 erkennbar ist - aufweisen.

Alternativ zu einem ebenen Verlauf des Bodens der Mulden 33, 33' kann letzterer für die Greifunterstützung der Finger auch im Querschnitt betrachtet konvex bogenförmig ausgebildet sein.

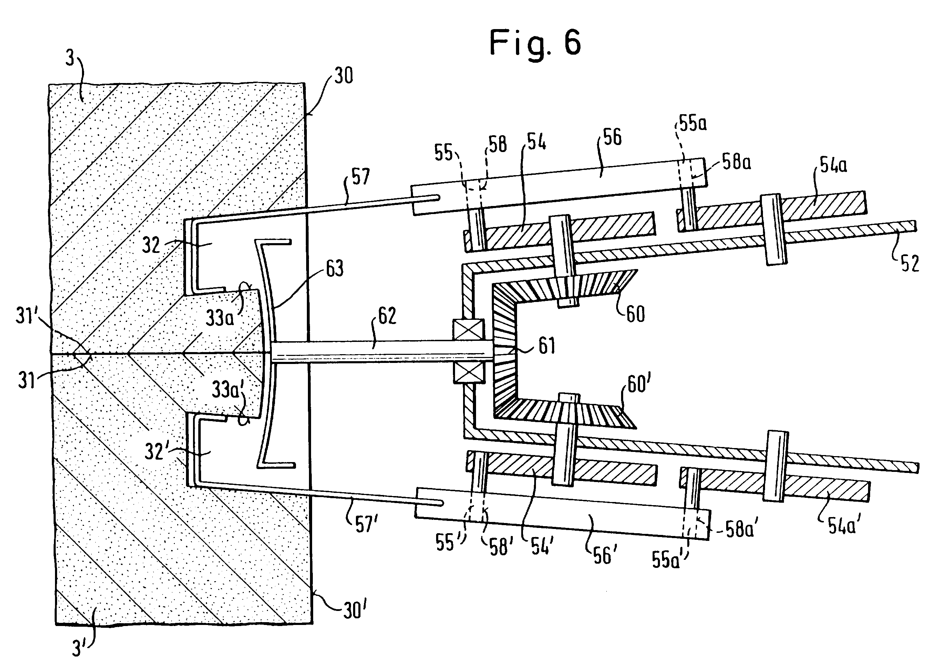

Hierzu wird der rotierende Fräsdraht 63 gemäß Fig. 6 entsprechend konkav gekrümmt.

Die in Fig. 6 dargestellte zudem abgewandelte Fräsvorrichtung hat konvergierend angeordnete Schubstangen 56, 56' mit entsprechend schiefgestellten Antriebseinrichtungen, wobei die Schubstangen 56, 56' mit ihren vorderen, die Fräsbügel tragenden Enden näher beieinander liegen als mit ihren hinteren Enden. Aus dieser Stellung resultieren hinterschnittene Schlitzdeckenwände 33a, 33a', aber auch nach außen abfallende Bodenwandungen 33b.

Der Aufbau der Fräsvorrichtung gemäß Fig. 6 entspricht somit im wesentlichen dem Aufbau der Fräsvorrichtung gemäß Fig. 5, bis auf die schräggestellte Anordnung der Schubstangen, der Schwungräder und der Kegelzahnräder, die mit den Schwungrädern verbunden sind, wobei in Fig. 6 die Antriebsübertragung von der Antriebswelle sowie diese im einzelnen nicht dargestellt sind.

Mit der Erfindung wird angestrebt, insbesondere die Kontaktflächen der Greifhilfe, mit denen die Hand des Maurers in Kontakt kommt, ergonomisch so auszubilden, daß Kanten oder Vorsprünge nicht stören und ein Abrutschen der Hand vermieden wird. Ersteres wird dadurch erreicht, daß der Griffschlitzboden 35 etwa geradlinig verläuft, was durch eine Bewegung der erfindungsgemäßen Fräsvorrichtung in Doppelpfeilrichtung 36 (siehe z. B. Fig. 1) bewerkstelligt werden kann. Damit verbunden ist aber bei diesen Ausführungsformen der erfindungsgemäßen Fräsvorrichtung eine Verbreiterung des Griffschlitzes, sofern der einfache Hub des Kurbeltriebs bereits eine ausreichende Breite des Griffschlitzes erzeugt, was der Einfachheit halber anzustreben ist. Kurzhubige Kurbeltriebe arbeiten mit einer hohen Frequenz, was nicht unbedingt vorteilhaft ist.

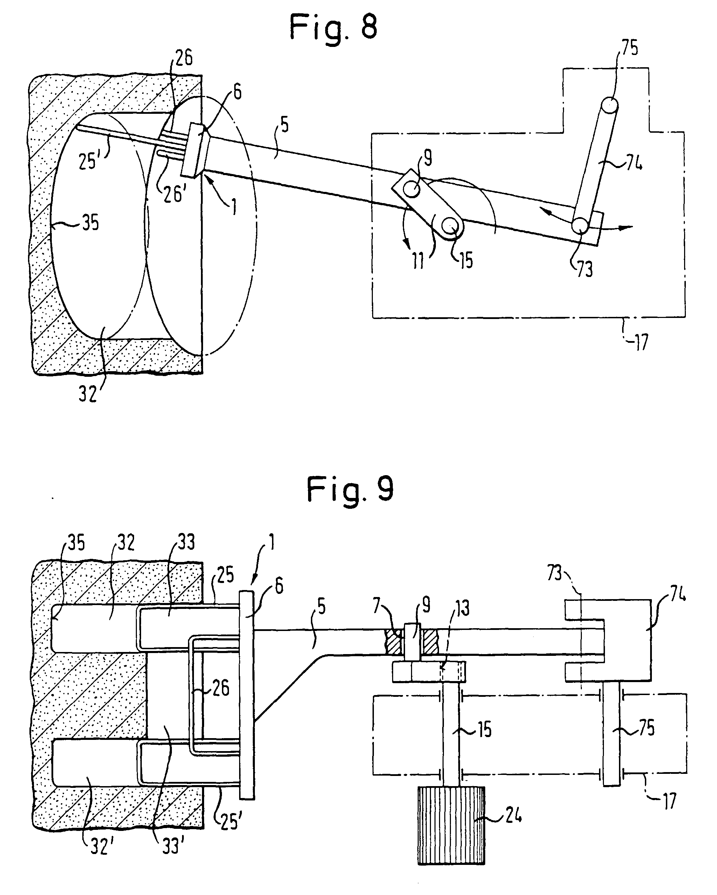

Nach einer besonderen Ausführungsform der Erfindung wird mit einem einfach aufgebauten Werkzeug mit dem Kurbeltrieb, dessen Hubhöhe der gewünschten Schlitzbreite entspricht, ein Griffschlitz erzeugt, dessen Schlitzboden 35 optimal dem Verlauf der Fingerkuppenlinie von zum Greifen gekrümmten Fingern entspricht. Diese Ausführungsform der Erfindung wird in den Fig. 8 und 9 verdeutlicht.

Der Fräswerkzeugeinheit gemäß Fig. 1 und 2, bestehend aus dem Werkzeugkopf 1 mit Fräsbügeln 25, 25' bzw. 26, 26' sowie der Schubstange 5, wird statt der Kreisbogenbewegung eine ellipsenbogenförmige Kurbelbewegung aufgezwungen, woraus resultiert, daß der Schlitzboden 35 eine entsprechende flache Ellipsenbogenform erhält, wie in Fig. 8 erkennbar ist. Auch die Schlupfmulde 33 erhält dadurch einen entsprechenden flachen Ellipsenbogenverlauf, der greifangenehm ist.

Die nahezu optimale Raumform des Griffschlitzes zum sicheren Greifen und Halten des Steins wird mit einer lediglich anderen Lagerung des hinteren Endes der Schubstange 5 erreicht, wobei die vordere, dem Werkzeugkopf 1 zugewandte Lagerung der Lagerung gemäß der Ausführungsform nach Fig. 1 und 2 entspricht. Die hintere Lagerung sieht dagegen vor, daß die Schubstange 5 gelenkig mit einer Drehachse 73 am unteren Ende eines Schwingarms 74 angelenkt ist, dessen oberes Ende mit einer zweifach gelagerten, parallel zur Welle 15 im Chassis 17 nach hinten und oben versetzt angeordneten Drehwelle 75 lagert.

Der Antrieb dieses Kurbeltriebs kann wie in Fig. 2 dargestellt, mit einem Motor 24 und einer Zahnradkombination 19, 21 (in Fig. 9 nicht dargestellt) oder, wie in Fig. 9 dargestellt, mittels des direkt mit der Welle 15 verbundenen Motors 24 erfolgen.

Bei Verwendung eines Werkzeugkopfes 1 mit den Fräsbügeln 25, 25' gemäß Fig. 4 und einer Bewegung der Fräsvorrichtung in Doppelpfeilrichtung 41 kann auch mit der Vorrichtung gemäß Fig. 8 und 9 ein Hinterschnitt der Deckenwandung 33a, 33a', wie in Fig. 4 erkennbar, erzeugt werden. Damit läßt sich mit dieser Ausführungsform der erfindungsgemäßen Fräsvorrichtung eine ergonomisch nahezu optimale Raumform der Greifhilfe gestalten.

## Patentansprüche

1. Quaderförmiger, großformatiger Mauerstein aus Porenbeton, insbesondere Gasbeton, mit einer Griffhilfe in wenigstens einer Stoßfläche (30,30') des Mauersteins (3,3'), die einen Griffschlitz (32) umfaßt und eine rechteckige Mündungsöffnung aufweist, wobei die Breite des Griffschlitzes (32) etwa der Breite einer Hand einer männlichen Person entspricht und die Höhe mehr als fingerdick ist, wobei der Griffschlitz (32) eine ebene Dekkenwandung (33a), eine ebene Bodenwandung (33b) sowie senkrecht zur Bodenwandung (33b) verlaufende Seitenwandungen (34a,34b) und einen ebenfalls dazu senkrecht verlaufenden Schlitzboden (35) aufweist, wobei die Seitenwandungen (34a,34b) bogenförmig in den Schlitzboden (35) übergehen,
dadurch **gekennzeichnet,**
daß die Tiefe des Griffschlitzes (32) zumindest halb so groß ist wie die Breite der rechteckigen Mündungsöffnung.

2. Mauerstein nach Anspruch 1,
**dadurch gekennzeichnet,**
daß die Breite 4 bis 10 und die Tiefe 6 bis 10 cm beträgt.

3. Mauerstein nach Anspruch 1 und/oder 2,
**dadurch gekennzeichnet,**
daß die Seitenwandungen (34a, 34b) sich von der Mündungsöffnung senkrecht in den Stein hinein erstrecken.

4. Mauerstein nach einem oder mehreren der Ansprüche 1 bis 3,
**dadurch gekennzeichnet,**
daß die Höhe des Griffschlitzes (32) 2 - 5 cm beträgt.

5. Mauerstein nach einem oder mehreren der Ansprüche 1 bis 4,
**dadurch gekennzeichnet,**
daß in jeder Stirnfläche (30) des Mauersteins je ein Griffschlitz (32) vorgesehen ist, wobei die Griffschlitze zweckmäßigerweise sich gegenüberliegend angeordnet sind.

6. Mauerstein nach Anspruch 5,
**dadurch gekennzeichnet,**
daß der Griffschlitz (32) ein Stück unterhalb der Oberfläche (31) des Steins angeordnet ist.

7. Mauerstein nach Anspruch 6,
**dadurch gekennzeichnet,**
daß sich von der Oberkante der Mündungsöffnung des Griffschlitzes (32) bis zur Stirnkante der Oberfläche (31) eine Schlupfmulde (33) erstreckt.

8. Mauerstein nach Anspruch 7,
**dadurch gekennzeichnet,**
daß die Schlupfmulde (33) breiter ist als die Mündungsöffnung des Schlitzes (32).

9. Mauerstein nach Anspruch 7 und/oder 8,
**dadurch gekennzeichnet,**
daß die Tiefe zweier sich gegenüberliegender Schlupfmulden (33) zweier Steine etwa fingerdick, zweckmäßigerweise mehr als fingerdick tief ist.

10. Mauerstein nach einem oder mehreren der Ansprüche 7 bis 9,
**dadurch gekennzeichnet,**
daß der Muldenboden (37) mit kurzen Bogenabschnitten in die Stirnfläche (30) des Mauersteins mündet und im Bereich zwischen den Bögenabschnitten geradlinig verläuft.

11. Mauerstein nach einem oder mehreren der Ansprüche 1 bis 10,
**dadurch gekennzeichnet,**
daß die Deckenwandung (33a) des Schlitzes (32) hinterschnitten ausgebildet ist, so daß sich die Höhe des Schlitzes vom Bereich der Mündungsöffnung zum Schlitzboden (35) hin vergrößert.

12. Mauerstein nach einem oder mehreren der Ansprüche 1 bis 11,
**dadurch gekennzeichnet,**
daß der Schlitzboden (35) zumindest ein Stück im mittleren Bereich ebenflächig ausgebildet ist.

13. Mauerstein nach einem oder mehreren der Ansprüche 1 bis 11,
**dadurch gekennzeichnet,**
daß der Schlitzboden (35) ellipsenbogenförmig ausgefräst ausgebildet ist.

14. Mauerstein nach Anspruch 13,
**dadurch gekennzeichnet,**
daß auch der Muldenboden (37) ellipsenbogenförmig ausgefräst ausgebildet ist.

15. Verfahren zur Herstellung der Greifhilfe im Mauerstein nach einem oder mehreren der Ansprüche 1 bis 14, wobei mit einem Fräsbügel in periodischen kreisbogenförmigen oder ellipsenbogenförmigen Bewegungen ein Griffschlitz mit einer rechteckigen Mündungsöffnung ausgefräst wird,
dadurch **gekennzeichnet,**
daß der Fräsbügel mittels einer Schubstange von außen an den Mauerstein heran- und anschließend in den Mauerstein so hineingefahren wird, daß der Griffschlitz zumindest halb so tief ist, wie die Breite an der rechteckigen Mündungsöffnung beträgt.

16. Verfahren nach Anspruch 15,
**dadurch gekennzeichnet,**
daß zur Erzeugung der Fräsbewegung ein Kurbeltrieb verwendet wird.

17. Verfahren nach Anspruch 15 und/oder 16,
**dadurch gekennzeichnet,**
daß gleichzeitig mit einem die gleichen Bewegungen ausführenden Fräsbügel die Schlupfmulde ausgefräst wird.

18. Verfahren nach einem oder mehreren der Ansprüche 15 bis 17,
**dadurch gekennzeichnet,**
daß gleichzeitig der Griffschlitz und die Schlupfmulde in zwei mit ihren Oberflächen (31) aneinanderliegenden und mit ihren Stirnflächen fluchtenden Mauersteinen eingefräst werden.

19. Verfahren nach einem oder mehreren der Ansprüche 15 bis 18,
**dadurch gekennzeichnet,**
daß die Fräsbügel zusätzlich zu den periodisch ausgeführten Bewegungen zur Verbreiterung des Griffschlitzes und ggf. auch der Schlupfmulde eine weitergehende Bewegung über die Hubbewegung der periodischen Bewegung hinaus ausführen.

20. Vorrichtung zur Herstellung der Greifhilfe im Mauerstein nach einem oder mehreren der Ansprüche 1 bis 14, insbesondere zur Durchführung des Verfahrens nach einem oder mehreren der Ansprüche 15 bis 19, mit einem Kurbeltrieb (2) zur Erzeugung einer kreisbogenförmigen oder ellipsenbogenförmigen Bewegung und einem Werkzeugkopf (1) mit mindestens einem Fräsbügel (25),
dadurch **gekennzeichnet,**
daß zwischen dem Kurbeltrieb (2) und dem Werkzeugkopf (1) eine Schubstange (5) vorgesehen ist, mit der die kreisbogenförmige oder ellipsenbogenförmige Bewegung des Kurbeltriebs (2) auf den Werkzeugkopf übertragen wird.

21. Vorrichtung nach Anspruch 20,
**dadurch gekennzeichnet,**
daß der Werkzeugkopf (1) eine Tragplatte (6) aufweist, an der zwei Paar unterschiedlich gestaltete Fräsbügel (25, 25' bzw. 26, 26') sich nach vorne erstreckend angebracht sind, die jeweils U-förmig gebogene Profildrähte sind, deren freie Schenkelenden in der Tragplatte verankert sind.

22. Vorrichtung nach Anspruch 21,
**dadurch gekennzeichnet,**
daß die Fräsbügel (26, 26') kürzer ausgeführt sind als die Fräsbügel (25, 25').

23. Vorrichtung nach Anspruch 22,
**dadurch gekennzeichnet,**
daß die U-förmigen Profildrähte der Fräsbügel (25, 25') ) länger und schmaler ausgebildet sind als die Fräsbügel (26, 26') und seitlich nebeneinander in einer im Vergleich zur Schwingebene der Schubstange (5) horizontal bzw. dazu senkrechten Ebene liegen, und zwar im Zwischenraum zwischen den vertikal übereinander angeordneten Fräsbügeln (26, 26').

24. Vorrichtung nach Anspruch 23,
**dadurch gekennzeichnet,**
daß - in Richtung Schwingbewegung betrachtet - jeder außenliegende Schenkel der Fräsbügel (26, 26') jeweils zwischen den Schenkeln eines der Fräsbügel (25, 25') angeordnet ist.

25. Vorrichtung nach einem oder mehreren der Ansprüche 20 bis 24,
**dadurch gekennzeichnet,**
daß der Schenkel des Schlitzfräsbügels (25), der die Dekkenwandung (33a) des Schlitzes (32) fräst, vom Basissteg her schräg auf den anderen Schenkel zulaufend ausgebildet ist, und daß die Breite des Basisstegs des Bügels (25) geringer ausgeführt ist als die Höhe des Schlitzes (32) betragen soll.

26. Vorrichtung nach einem oder mehreren der Ansprüche 20 bis 25,
**dadurch gekennzeichnet,**
daß der Fräsbügel (25) bzw. die Fräsbügel (25, 25') L-förmig ausgebildet sind.

27. Vorrichtung nach einem oder mehreren der Ansprüche 20 bis 26,
**dadurch gekennzeichnet,**
daß die Schubstange (5) zwei in ihrer Längserstreckung voneinander beabstandete Bohrungen (7, 8) aufweist, die senkrecht zur Erstreckungsrichtung der Schubstange (5) verlaufen, in den Bohrungen (7, 8) Zapfen (9, 10) drehbar sitzen, die jeweils an einem Ende eines Hebelarms (11, 12) angeordnet und fest mit diesem verbunden sind, die Hebelarme (11, 12) zusammen mit den Zapfen (8, 9) die Kurbeln des Kurbeltriebs (2) bilden, die Hebelarme (2, 12) anderendig Bohrungen (13, 14) aufweisen, welche in Wellen (15, 16) drehfest eingesetzt sind und sich entgegengesetzt zur Richtung der Zapfen (9, 10) erstrecken, wobei die Wellen (15, 16) in Lagern (18) gelagert sind und zwischen zwei zusammengehörenden Lagern (18) auf einer Welle (15, 16) auf jeder Welle ein Zahnrad (19, 20) drehfest angeordnet ist und mit den Zahnrädern (19, 20) gemeinsam ein dazwischenliegendes Zahnrad (21) kämmt, das drehfest auf einer Welle (22) sitzt und die Welle (22) mit einem Antriebsmotor (24) in Verbindung steht.

28. Vorrichtung nach einem oder mehreren der Ansprüche 20 bis 26,
**dadurch gekennzeichnet,**
daß zwei seitlich voneinander beabstandete, jedoch gemeinsam angetriebene Kurbeleinheiten vorgesehen sind, .wobei eine gemeinsame Antriebswelle (50) angeschlossen ist, die Welle (50) beidseitig länger als erforderlich ist und ein Zahnrad (51) trägt, das fest mit der Welle (50) verbunden ist und mit einem Zahnrad (52) kämmt, das fest mit einer Welle (53) verbunden ist, die beidseits gelagert ist und über diese Lager nach außen vorsteht, wobei auf den vorstehenden Wellenenden Schwungräder (54, 54') fest sitzen, in die Schwungräder (54, 54') jeweils an derselben Position peripher nach außen vorstehende Zapfen (55, 55') fest eingesetzt sind, eine der Schwungradanordnungen (54, 54') entsprechende Schwungradanordnung (54a, 54a') zurückgesetzt in etwa gleicher Höhe gelagert vorgesehen ist, auf die Schwungräder (54a und 54a') peripher nach außen abstehende Zapfen (55a, 55a') fest tragen, und wobei die Zapfen (55, 55' sowie 55a und 55a') drehbar in einer Schubstange (56, 56') lagern.

29. Vorrichtung nach Anspruch 28,
**dadurch gekennzeichnet,**
daß die Welle (53) zusätzlich zu dem Zahnrad (52) wenigstens ein Kegelzahnrad (60) trägt, das fest mit der Welle (53) verbunden ist und mit einem Kegelzahnrad (61) kämmt, das senkrecht dazu angeordnet und fest mit einer zur Welle (53) senkrecht stehenden Welle (62) verbunden ist, die drehbar gelagert ist, wobei die Welle (62) an ihrem freien vorderen Ende einen Fräsbügel (63) trägt.

30. Vorrichtung nach Anspruch 28 und/oder 29,
**dadurch gekennzeichnet,**
daß die Schubstangen (56, 56') konvergierend zueinander angeordnet sind, wobei die Schubstangen (56, 56') mit ihren vorderen, die Fräsbügel tragenden Enden näher beieinander liegen als mit ihren hinteren Enden.

31. Vorrichtung nach Anspruch 26,
**dadurch gekennzeichnet,**
daß die Lagerung des hinteren Endes der Schubstange (5) gelenkig mit einer Drehachse (73) am unteren Ende eines Schwingarms (74) angelenkt ist, dessen oberes Ende mit einer zweifach gelagerten, parallel zur Welle (15) nach hinten und oben versetzt angeordneten Drehwelle (75) lagert.

32. Vorrichtung nach Anspruch 31,
**dadurch gekennzeichnet,**
daß die Welle (15) direkt mit einem Motor (24) verbunden ist.

## Claims

1. Parallelepipedal, large-sized masonry block made of aerated concrete, in particular gas concrete, having a gripping aid in at least one abutting face (30, 30') of the masonry block (3, 3'), which gripping aid comprises a gripping slot (32) and has a rectangular mouth opening, the width of the gripping slot (32) corresponding approximately to the width of a hand of a male person and the height being greater than the thickness of a finger, the gripping slot (32) having a plane top wall (33a), a plane bottom wall (33b) and side walls (34a, 34b) running perpendicularly to the bottom wall (33b), and a slot base (35) likewise running perpendicularly thereto, the side walls (34a, 34b) merging arcuately into the slot base (35), characterised in that the depth of the gripping slot (32) is at least half as great as the width of the rectangular mouth opening.

2. Masonry block according to Claim 1, characterised in that the width is 4 to 10 and the depth 6 to 10 cm.

3. Masonry block according to Claim 1 and/or 2, characterised in that the side walls (34a, 34b) extend from the mouth opening perpendicularly into the block.

4. Masonry block according to one or more of Claims 1 to 3, characterised in that the height of the gripping slot (32) is 2 - 5 cm.

5. Masonry block according to one or more of Claims 1 to 4, characterised in that there is provided in each end face (30) of the masonry block a respective gripping slot (32), the gripping slots (32) expediently being arranged opposite each other.

6. Masonry block according to Claim 5, characterised in that the gripping slot (32) is arranged some way below the upper face (31) of the block.

7. Masonry block according to Claim 6, characterised in that an indentation (33) extends from the upper edge of the mouth opening of the gripping slot (32) as far as the end edge of the upper face (31).

8. Masonry block according to Claim 7, characterised in that the indentation (33) is wider than the mouth opening of the slot (32).

9. Masonry block according to Claim 7 and/or 8, characterised in that the depth of two mutually opposite indentations (33) of two blocks is approximately equal to the thickness of a finger, and expediently greater than the thickness of a finger.

10. Masonry block according to one or more of Claims 7 to 9, characterised in that the base (37) of the indentation leads into the end face (30) of the masonry block with curved segments and runs in a straight line in the region between the curved segments.

11. Masonry block according to one or more of Claims 1 to 10, characterised in that the top wall (33a) of the slot (32) is designed with an undercut, so that the height of the slot increases from the region of the mouth opening towards the slot base (35).

12. Masonry block according to one or more of Claims 1 to 11, characterised in that the slot base (35) is of plane design, at least a portion in the central region.

13. Masonry block according to one or more of Claims 1 to 11, characterised in that the slot base (35) is designed milled out in the form of an elliptical arc.

14. Masonry block according to Claim 13, characterised in that the base (37) of the indentation is also designed milled out in the form of an elliptical arc.

15. Method for producing the gripping aid in the masonry block according to one or more of Claims 1 to 14, in which a gripping slot having a rectangular mouth opening is milled out by a milling bow in periodic circular-arc or elliptical-arc movements, characterised in that the milling bow is moved, by means of a connecting rod, from outside up to the masonry block and subsequently into the masonry block such that the gripping slot is at least half as deep as the width at the rectangular mouth opening.

16. Method according to Claim 15, characterised in that a crank mechanism is used to produce the milling movement.

17. Method according to Claim 15 and/or 16, characterised in that the indentation is milled out simultaneously by a milling bow executing the same movements.

18. Method according to one or more of Claims 15 to 17, characterised in that the gripping slot and the indentation are simultaneously milled into two masonry blocks lying with their upper faces (31) against each other and with their end faces flush.

19. Method according to one or more of Claims 15 to 18, characterised in that the milling bows execute, in addition to the periodically executed movements, a farther-reaching movement beyond the stroke movement of the periodic movement in order to widen the gripping slot and if necessary also the indentation.

20. Device for producing the gripping aid in the masonry block according to one or more of Claims 1 to 14, in particular for carrying out the method according to one or more of Claims 15 to 19, having a crank mechanism (2) for producing a circular-arc or elliptical-arc movement and a tool head (1) with at least one milling bow (25), characterised in that there is provided between the crank mechanism (2) and the tool head (1) a connecting rod (5), by which the circular-arc or elliptical-arc movement of the crank mechanism (2) is transmitted to the tool head.

21. Device according to Claim 20, characterised in that the tool head (1) has a carrying plate (6), to which there are attached in a forwardly extending manner two pairs of differently shaped milling bows (25, 25' and 26, 26' respectively) which are in each case profiled wires bent in the shape of a U, the free arm ends of which are anchored in the carrying plate.

22. Device according to Claim 21, characterised in that the milling bows (26, 26') are constructed shorter than the milling bows (25, 25').

23. Device according to Claim 22, characterised in that the U-shaped profiled wires of the milling bows (25, 25') are designed longer and narrower than the milling bows (26, 26') and are located laterally one beside the other in a plane which is horizontal in comparison with the oscillating plane of the connecting rod (5) or perpendicular thereto, specifically in the interspace between the milling bows (26, 26') arranged vertically one above the other.

24. Device according to Claim 23, characterised in that - viewed in the direction of oscillating movement - each outer arm of the milling bows (26, 26') is respectively arranged between the arms of one of the milling bows (25, 25').

25. Device according to one or more of Claims 20 to 24, characterised in that the arm of the slot-milling bow (25) which mills the top wall (33a) of the slot (32) is designed so as to run obliquely from the base web towards the other arm, and in that the width of the base web of the bow (25) is constructed smaller than the intended height of the slot (32).

26. Device according to one or more of Claims 20 to 25, characterised in that the milling bow (25) or the milling bows (25, 25') are of L-shaped design.

27. Device according to one or more of Claims 20 to 26, characterised in that the connecting rod (5) has two bores (7, 8) spaced apart in its longitudinal extent and running perpendicularly to the direction in which the connecting rod (5) extends, rotatably seated in the bores (7, 8) are pins (9, 10) which are respectively arranged at one end of a lever arm (11, 12) and fixedly connected thereto, the lever arms (11, 12) together with the pins (8, 9) form the cranks of the crank mechanism (2), at the other end the lever arms (11¹, 12) have bores (13, 14) into which² shafts (15, 16) are inserted in a rotationally fixed manner and extend in the direction opposite to the direction of the pins (9, 10), the shafts (15, 16) being mounted in bearings (18) and between two bearings (18), belonging together, on one shaft (15, 16) there being arranged in a rotationally fixed manner a gear (19, 20) on each shaft, and meshing commonly with the gears (19, 20) is a gear (21) which is located therebetween and seated in a rotationally fixed manner on a shaft (22) and the shaft (22) being connected to a drive motor (24).

28. Device according to one or more of Claims 20 to 26, characterised in that two laterally spaced-apart but commonly driven crank units are provided, in which a common drive shaft (50) is connected [lacuna], the shaft (50) at both ends being longer than necessary and carrying a gear (51) which is fixedly connected to the shaft (50) and meshes with a gear (52) which is fixedly connected to a shaft (53) having bearings at both ends and projecting outwardly beyond these bearings, flywheels (54, 54') being fixedly seated on the projecting shaft ends and peripherally outwardly projecting pins (55, 55') being fixedly inserted into the flywheels (54, 54') in each case at the same position, a flywheel arrangement (54a, 54a') corresponding to the flywheel arrangements (54, 54') being provided, mounted set back at approximately the same height, the³ flywheels (54a and 54a') fixedly carrying peripherally outwardly protruding pins (55a, 55a'), and the pins (55, 55', and 55a and 55a') being rotatably mounted in a connecting rod (56, 56').

29. Device according to Claim 28, characterised in that the shaft (53) carries, in addition to the gear (52), at least one bevel gear (60) which is fixedly connected to the shaft (53) and meshes with a bevel gear (61) arranged perpendicularly to it and fixedly connected to a rotatably mounted shaft (62) situated perpendicularly to the shaft (53), the shaft (62) carrying at its free front end a milling bow (63).

30. Device according to Claim 28 and/or 29, characterised in that the connecting rods (56, 56') are arranged so as to converge with respect to each other, the connecting rods (56, 56') being located closer together at their front ends, carrying the milling bows, than at their rear ends.

31. Device according to Claim 26, characterised in that the bearing arrangement of the rear end of the connecting rod (5) is linked in an articulated manner to a pivot pin (73) at the lower end of an oscillating arm (74), the upper end of which is borne by a rotary shaft (75) which has two bearings and is arranged parallel to the shaft (15), towards the rear and offset upwards.

32. Device according to Claim 31, characterised in that the shaft (15) is directly connected to a motor (24).

## Revendications

1. Bloc de construction parallélépipédique, de grande taille, en béton poreux, en particulier en béton cellulaire autoclavé, pourvu d'un moyen de préhension dans au moins une face de parement (30,30') du bloc de construction (3,3') laquelle comporte une fente de préhension (32) et présente une ouverture rectangulaire, la largeur de la fente de préhension (32) correspondant à peu près à la largeur d'une main d'une personne et sa hauteur étant supérieure à l'épaisseur d'un doigt, la fente de préhension (32) présentant une paroi supérieure plane (33a), une paroi inférieure plane (33b) ainsi que des parois latérales (34a,34b) s'étendant perpendiculairement à la paroi inférieure (33b) et une paroi de fond de fente (35) également perpendiculaire à ces parois, les parois latérales (34a,34b) se raccordant d'une manière courbe à la paroi de fond de fente (35), caractérisé en ce que la profondeur de la fente de préhension (32) est égale à au moins la moitié de la largeur de l'ouverture rectangulaire.

2. Bloc de construction suivant la revendication 1 caractérisé en ce que la largeur de la fente va de 4 à 10 centimètres et sa profondeur de 6 à 10 centimètres.

3. Bloc de construction suivant la revendication 1 et/ou 2 caractérisé en ce que les parois latérales (34a,34b) s'étendent perpendiculairement vers l'intérieur du bloc, à partir de l'ouverture de la fente.

4. Bloc de construction suivant une ou plusieurs des revendications 1 à 3 caractérisé en ce que la hauteur de la fente de préhension (32) va de 2 à 5 centimètres.

5. Bloc de construction suivant une ou plusieurs des revendications 1 à 4 caractérisé en ce que dans chaque face frontale (30) du bloc de construction est prévue une fente de préhension (32), les fentes de préhension étant avantageusement disposées l'une en regard de l'autre.

6. Bloc de construction suivant la revendication 5 caractérisé en ce que la fente de préhension (32) est située un peu en dessous de la surface (31) du bloc.

7. Bloc de construction suivant la revendication 6 caractérisé en ce qu'une cavité de glissement (33) s'étend à partir du bord supérieur de l'ouverture de la fente de préhension (32) jusqu'au bord frontal de la surface (31).

8. Bloc de construction suivant la revendication 7 caractérisé en ce que la cavité de glissement (33) est plus large que l'ouverture de la fente de préhension (32).

9. Bloc de construction suivant la revendication 7 et/ou 8 caractérisé en ce que la profondeur de deux cavités de glissement (33), se trouvant l'une en face de l'autre, de deux blocs est sensiblement égale à l'épaisseur d'un doigt et de préférence supérieure à cette épaisseur.

10. Bloc de construction suivant une ou plusieurs des revendications 7 à 9 caractérisé en ce que le fond (37) de la cavité se raccorde à la face frontale (30) du bloc de construction par l'intermédiaire de courts tronçons courbes et il est rectiligne dans la zone comprise entre les tronçons courbes.

11. Bloc de construction suivant une ou plusieurs des revendications 1 à 10 caractérisé en ce que la paroi supérieure (33a) de la fente (32) est formée de manière à être creusée en arrière de telle façon que la hauteur de la fente aille en augmentant de la zone de son ouverture jusqu'à la paroi de fond de fente (35).

12. Bloc de construction suivant une ou plusieurs des revendications 1 à 11 caractérisé en ce que la paroi de fond de fente (35) est formée de manière à être au moins un peu plane dans sa zone médiane.

13. Bloc de construction suivant une ou plusieurs des revendications 1 à 11 caractérisé en ce que la paroi de fond de fente (35) est réalisée par fraisage de manière à avoir une forme d'ellipse.

14. Bloc de construction suivant la revendication 13 caractérisé en ce que le fond (37) de la cavité est également formé par fraisage de manière à avoir une forme d'ellipse.

15. Procédé de fabrication du moyen de préhension dans un bloc de construction suivant une ou plusieurs des revendications 1 à 14, dans lequel on fraise, au moyen d'un étrier de fraisage animé de mouvements périodiques de forme circulaire ou elliptique, une fente de préhension ayant une ouverture rectangulaire, caractérisé en ce que l'étrier de fraisage est entraîné à partir de l'extérieur, au moyen d'une bielle, contre le bloc de construction et ensuite à l'intérieur du bloc de construction de telle façon que la fente de préhension ait une profondeur au moins égale à la moitié de la largeur de son ouverture rectangulaire.

16. Procédé suivant la revendication 15 caractérisé en ce qu'on utilise un mécanisme à manivelle pour la production du mouvement de fraisage.

17. Procédé suivant la revendication 15 et/ou 16 caractérisé en ce qu'on fraise en même temps la cavité de glissement au moyen d'un étrier de fraisage exécutant les mêmes mouvements.

18. Procédé suivant une ou plusieurs des revendications 15 à 17 caractérisé en ce qu'on fraise en même temps la fente de préhension et la cavité de glissement dans deux blocs de construction appliqués l'un contre l'autre par leurs surfaces (31) et dont les faces frontales sont à fleur.

19. Procédé suivant une ou plusieurs des revendications 15 à 18 caractérisé en ce que l'étrier de fraisage exécute, en plus des mouvements périodiques pour l'élargissement de la fente de préhension (32) et éventuellement aussi de la cavité de glissement (33), un mouvement additionnel superposé au mouvement de course du mouvement périodique.

20. Dispositif pour la réalisation du moyen de préhension dans un bloc de construction suivant une ou plusieurs des revendications 1 à 14, en particulier par la mise en oeuvre du procédé suivant une ou plusieurs des revendications 15 à 19, comportant un mécanisme à manivelle (2) pour la production d'un mouvement de forme circulaire ou elliptique et une tête porte-outil (1) comportant au moins un étrier de fraisage (25), caractérisé en ce qu'entre le mécanisme à manivelle (2) et la tête porte-outil est prévue une bielle (5) au moyen de laquelle le mouvement de forme circulaire ou elliptique du mécanisme à manivelle (2) est transmis à la tête porte-outil.

21. Dispositif suivant la revendication 20 caractérisé en ce que la tête porte-outil (1) comprend une plaque support (6) dont sont solidaires deux paires d'étriers de fraisage (25,25';26,26') de formes différentes, s'étendant vers l'avant, lesquels sont constitués chacun d'un fil profilé replié en forme de U dont les extrémités libres des branches sont ancrées dans la plaque support.

22. Dispositif suivant la revendication 21 caractérisé en ce que les étriers de fraisage (26,26') sont plus courts que les étriers de fraisage (25,25').

23. Dispositif suivant la revendication 22 caractérisé en ce que les fils profilés en forme de U des étriers de fraisage (25,25') sont plus longs et plus étroits que ceux des étriers de fraisage (26,26') et ils sont situés l'un à côté de l'autre, latéralement, dans un plan horizontal ou perpendiculaire par rapport au plan d'oscillations de la bielle (5) et ce dans l'espace intermédiaire compris entre les étriers de fraisage (26,26') disposés l'un au-dessus de l'autre dans le sens vertical.

24. Dispositif suivant la revendication 23 caractérisé en ce que, vu dans la direction du mouvement d'oscillation, chaque branche de l'étrier de fraisage (26,26'), s'étendant vers l'extérieur, se trouve entre les branches d'un des étriers de fraisage (25,25').

25. Dispositif suivant une ou plusieurs des revendications 20 à 24 caractérisé en ce que la branche de l'étrier (25) de fraisage de la fente qui fraise la paroi supérieure (33a) de la fente (32), est formée de manière à s'étendre en étant inclinée, à partir de l'âme de base, vers l'autre branche et en ce que la largeur de l'âme de base de l'étrier (25) est choisie plus petite que la hauteur devant être présentée par la fente (32).

26. Dispositif suivant une ou plusieurs des revendications 20 à 25 caractérisé en ce que l'étrier de fraisage (25) ou les étriers de fraisage (25,25') sont réalisés en forme de L.

27. Dispositif suivant une ou plusieurs des revendications 20 à 26 caractérisé en ce que la bielle (5) présente deux trous (7,8) percés à distance l'un de l'autre dans le sens longitudinal, lesquels s'étendent perpendiculairement à la direction longitudinale de la bielle (5), dans les trous (7,8) sont engagés à rotation des doigts (9,10) qui sont disposés sur une extrémité d'un bras de levier (11,12) et fixés à ce bras, les bras de levier (11,12), conjointement avec les doigts (8,9), constituent les manivelles du mécanisme à manivelle (2), les bras de levier (11,12) sont percés, à leurs autres extrémités, de trous (13,14), trous dans lesquels sont engagés et bloqués en rotation des arbres (15,16) s'étendant à l'opposé des doigts (9,10), les arbres (15,16) sont montés dans des paliers (18) et entre deux paliers associés (18) est montée une roue dentée (19,20) solidaire en rotation de l'un des arbres (15,16) et avec les roues dentées (19,20) engrènent conjointement une roue dentée intermédiaire (21) qui est solidaire en rotation d'un arbre (22) connecté à un moteur d'entraînement (24).

28. Dispositif suivant une ou plusieurs des revendications 20 à 26 caractérisé en ce qu'il est prévu deux mécanismes à manivelle distants l'un de l'autre latéralement mais cependant entraînés en commun, un arbre d'entraînement commun (50) qui est plus long qu'il n'est nécessaire des deux côtés et qui porte une roue dentée (51) laquelle est solidaire de l'arbre 50 et est en prise avec une roue dentée (82) qui est solidaire d'un arbre (53), cet arbre étant monté dans des paliers des deux côtés et faisant saillie vers l'extérieur à travers ces paliers, des roues de commande d'oscillation (54,54') sont montées solidaires des parties extrêmes de l'arbre (53) faisant saillie, des doigts (55,55') s'étendant vers l'extérieur sont montés fixes sur les roues de commande d'oscillation (54,54'), dans la même position dans le sens périphérique, un ensemble de roues de commande d'oscillation (54a,54a'), correspondant à l'ensemble des roues de commande d'oscillation (54,54'), est monté à peu près à la même hauteur, en arrière, des doigts (55a,55a'), s'étendant vers l'extérieur, sont montés fixes sur les roues de commande d'oscillation (54a,54a') et les doigts (55,55';55a,55a') sont montés à rotation dans une bielle (56,56').

29. Dispositif suivant la revendication 28 caractérisé en ce que l'arbre (53) porte, en plus de la roue dentée (82), au moins une roue dentée conique (60) qui est solidaire de l'arbre (53) et qui est en prise avec une roue dentée conique (61) qui est disposée perpendiculairement et fixée à un arbre (62) s'étendant perpendiculairement à l'arbre (53) et qui est montée à rotation, et l'arbre (62) porte un étrier de fraisage (63) à son extrémité antérieure libre.

30. Dispositif suivant la revendication 28 et/ou 29 caractérisé en ce que les bielles (56,56') sont disposées de manière à converger l'une vers l'autre de telle façon que les bielles (56,56') soient plus proches l'une de l'autre par leurs extrémités antérieures portant les étriers de fraisage que par leurs extrémités postérieures.

31. Dispositif suivant la revendication 26 caractérisé en ce que l'extrémité postérieure de la bielle (5) est articulée, au moyen d'un axe de rotation (73), sur l'extrémité inférieure d'un bras oscillant (74) dont l'extrémité supérieure est montée sur un arbre rotatif (75) à palier double, parallèle à l'arbre (15) et décalé vers l'arrière et vers le haut.

32. Dispositif suivant la revendication 31 caractérisé en ce que l'arbre (15) est accouplé directement à un moteur (24).
